(19) Europäisches Patentamt

European Patent Office

Office européen des brevets

(11) Publication number: **0 259 890 A2**

# (12) EUROPEAN PATENT APPLICATION

(21) Application number: **87113346.8**

(51) Int. Cl.4: **H04N 9/04**

(22) Date of filing: **11.09.87**

(30) Priority: **11.09.86 JP 214633/86**

(43) Date of publication of application:
**16.03.88 Bulletin 88/11**

(84) Designated Contracting States:
**DE FR GB IT**

(71) Applicant: **SANYO ELECTRIC CO., LTD.**
**18, Keihanhondori 2-chome**
**Moriguchi-shi Osaka-fu(JP)**

(72) Inventor: **Watanabe, Tohru**
**5-500-4 Hikida-cho**
**Nara-shi Nara-ken(JP)**
Inventor: **Kazui, Kazuhiro**
**1-7-503 Saiinsanzo-cho Ukyo-ku**
**Kyoto-shi Kyoto-fu(JP)**
Inventor: **Murata, Haruhiko**
**1-12-1-709 Dainici-cho**
**Moriguchi-shi Osaka-fu(JP)**
Inventor: **Noguchi, Yoshimitsu**
**3-1-1-404 Shinkanaoka-cho**
**Sakai-shi Osaka-fu(JP)**
Inventor: **Kanayama, Hideyuki**
**14-46 Gokashoshinkai**
**Uji-shi Kyoto-fu(JP)**
Inventor: **Okino, Toshiyuki**
**9-22-303 Nakamiyayamato-cho**
**Hirakata-shi Osaka-fu(JP)**

(74) Representative: **Glawe, Delfs, Moll & Partner**
**Patentanwälte**
**Postfach 26 01 62 Liebherrstrasse 20**
**D-8000 München 26(DE)**

(54) **Moiré preventing circuit for color video camera.**

(57) A three-color stripe filter comprising Ye, G and Cy color filters are arranged on an image sensing surface of a solid-state image sensor (1), and sensed image output is sampled and separated for respective colors by sample-hold circuits (3, 4, 5). On the other hand, color temperature detecting sensors (S1 to S3) receive light of an object through a similar three-color filter and output the relative color temperature levels. A first comparator circuit (9) controls the gain of a first amplifier (6) in response to the difference between the color temperature levels of Ye and G, and a second comparator circuit (10) controls the gain of a third amplifier (8) in response to the difference between the color temperature levels of Cy and G. As a result, the average values of outputs derived from the amplifiers (6, 7, 8) become equal, so that a Moiré component in a luminance signal component is eliminated.

## FIG.1

1a.

## Moiré Preventing Circuit for Color Video Camera

### BACKGROUND OF THE INVENTION

Field of the Invention

The present invention relates to a Moiré preventing circuit and more particularly, to a Moiré preventing circuit for a color video camera using a solid-state image sensor.

Description of the Prior Art

A conventional color video camera using a solid-state image sensor comprises a color separating filter, including a predetermined number of color filters, which is arranged on an image sensing surface of the solid-state image sensor, so that color information on the same color is individually sampled, for each color and separated and derived from sensed image output of the solid-state image sensor.

More specifically, if and when a stripe filter having three colors is arranged on the image sensing surface of the solid-state image sensor as a color separating filter, combinations of color filters constituting the stripe filter can include combination of a yellow Ye (= R + G) filter, a green G filter and a cyanogen Cy (= B + G) filter. In this state, when the sensed image output of the solid-state image sensor is derived, without being separated for each color, by limiting only a bandwidth, the following output is obtained;

$$Ye + G + Cy = R + 3G + B \ ...(1).$$

The output is utilized as a luminance signal.

Let us now consider the case in which a white object is imaged with a color video camera using the solid-state image sensor having such a three-color stripe filter arranged. The outputs derived for respective colors (yellow, green and cyanogen) from the sensed image output in such a case are represented by $E_{Ye}$, $E_G$ and $E_{Cy}$, and Fourier expansion thereof is performed, provided that a Ye component, a G component and Cy component of the outputs are $R + G'$ $G''$, $G''' + B$, respectively, and the spatial frequency of the stripe filter is $f_1 = \omega_1/2\pi$.

Therefore, the results are as follows;

$$E_{Ye} = 1/3 \bullet (G' + R) + \sqrt{3}/\pi \bullet (G' + R) \bullet \cos\omega_1 t + \ ...(2)$$
$$E_G = 1/3 \bullet (G'') + \sqrt{3}/\pi \bullet G'' \bullet \cos(\omega_1 t + 2\pi/3) + \ ... (3)$$
$$E_{Cy} = 1/3 \bullet (G''' + B) + \sqrt{3}/\pi \bullet (G''' + B) \bullet \cos(\omega_1 t + 4\pi/3) + \ ...(4).$$

The above described luminance signal is represented as the sum of the equations (2), (3) and (4). However, the third and subsequent terms in each of the equations (2), (3) and (4) are omitted, because the level is low or the frequency is high.

Let us now consider the case in which the black and white pattern of a spatial frequency $f_2 = \omega_2/\pi_2$ is imaged as an object with the color video camera. When Fourier expansion of an output signal waveform corresponding to the black and white pattern in this case is performed, the result is as follows;

$$P = 1/2 + 2/\pi \bullet \cos\omega_2 t + \ ...(5).$$

In this case, the third and subsequent terms are also omitted.

Furthermore, if a luminance component is represented by E when such a black and white pattern is imaged, it becomes as follows;

$$E = P (E_{Ye} + E_G + E_{Cy})$$
$$\fallingdotseq E_Y (1/2 + 2/\pi \bullet \cos\omega_2 t) + \sqrt{3}/2\pi \bullet A + 2\sqrt{3}/\pi^2 \bullet A\cos \omega_2 t ...(6)$$

where,

$$E_Y = \{(G' + R) + G'' + (G''' + B)\} \bullet 1/3$$
$$A = (G' + R) \cos \omega_1 t + G''\cos (\omega_1 t + 2\pi/3) + (G''' + B) \bullet \cos (\omega_1 t + 4\pi/3).$$

$A \bullet \cos\omega_2 t$ included in the above described equation (6) comprises a frequency component on $(\omega_1 + \omega_2)$ and a frequency component on $(\omega_1 - \omega_2)$. The component on $(\omega_1 + \omega_2)$ has a high frequency, so that it can be omitted.

However, the component on $(\omega_1 - \omega_2$ actually appears as a signal component, so that it can not be ignored.

2

When the component on $(\omega_1 - \omega_2)$ in the above described $A \bullet \cos\omega_2 t$ is omitted and only the component on $(\omega_1 - \omega_2)$ is represented by $E_M$, the result is as follows;

$$E_M = (G' + R)/2 \bullet \cos(\omega_1 - \omega_2)t + G''/2 \bullet \cos\{(\omega_1 - \omega_2)t + 2\pi/3\} + (G''' + B)/2 \bullet \cos\{(\omega_1 - \omega_2)t + 4\pi/3\} \ ... (7).$$

At that time, the luminance component E in the equation (6) is generally passed through a low pass filter, and frequency components of values more than $\omega_1$ is almost cut off. More specifically, since $\sqrt{3}/2\pi \bullet A$ shown in the second term in the equation (6) includes only the component of $\omega_1$, it is cut off. If a resulting luminance signal is represented by Y,

when $\omega_1 > \omega_2$,

$$Y = E_Y \bullet (1/2 + 2/\pi \bullet \cos\omega_2 t) + E_m \ ... (8)$$

when $\omega_1 \leq \omega_2$,

$$Y = E_Y/2 + E_M \ ... (8').$$

As clear from the results, the obtained output always includes a frequency component of $(\omega_1 - \omega_2)$, so that a pseudo stripe, that is, Moiré is produced on a picture.

On the other hand, when the above described black and white pattern does not exist, that is, $\omega_2 = 0$, the luminance component in the equation (6) is as follows;

$$E = E_Y/2 + \sqrt{3}/2\pi \bullet A \ ... (9),$$

where $\sqrt{3}/2\pi \bullet A$ in the second term includes only the component of $\omega_1$. In such a case, not only the above described Moiré component of $(\omega_1 - \omega_2)$ but also a Moiré component of $\omega_1$ becomes a problem.

More specifically, all the component $\omega_1$ in the second term in the equation (6) should be ideally cut off by the above described low pass filter. However, as a matter of practice, the component $\omega_1$ is not cut off completely but attenuated and derived. Thus, the component $\omega_1$ becomes striped Moiré particularly in the achromatic portion on the picture, forming a striking contrast.

In order to solve the above described problems, it has been conventionally proposed that an optical low pass filter is arranged in the forward portion on the image sensing surface so that the component $\omega_2$ close to the component $\omega_1$ is not imaged. Such a method is disclosed in, for example, Japanese Publication, The Journal of The Institute of Television Engineers of Japan, Vol. 39, No. 8, 1985, pp. 49 - 56.

However, when such an optical low pass filter is used, the bandwidth of the luminance signal is limited and horizontal resolution is deteriorated.

## SUMMARY OF THE INVENTION

Therefore, a primary object of the present invention is to provide a Moiré preventing circuit for a color video camera for preventing occurrence of a Moiré component in a simple structure.

Briefly stated, the present invention is directed to a Moiré preventing circuit for a color video camera, the colour video camera including a solid-state image sensor having an image sensing surface receiving light from an object, a color separating filter comprising a plurality of predetermined color filters arranged in a predetermined order, sampling circuits for individually sampling sensed image output obtained from the solid-state image sensor for each of the predetermined colors and outputting the same as color information, and luminance signal processing circuits responsive to the color information outputted from the sampling circuits for forming a luminance signal, and the Moiré preventing circuit comprising amplifier means with variable gain for amplifying at least a part of the outputs sampled for respective colors of the sampling circuits, color temperature detecting means for detecting the color temperature level of light from the object, and gain control means responsive to an output of the color temperature detecting means for controlling the gain of the amplifier means so that the average levels of outputs sampled for respective colors of the sampling circuits coincide with each other.

A principal advantage of the present invention is that occurrence of Moiré on a picture can be prevented by eliminating unbalance of the average levels of outputs sampled for respective colours.

These objects and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a schematic block diagram showing a first embodiment of the present invention;

Fig. 2 is a graph showing light source color temperature dependency of each output of a color temperature detecting sensor S in the embodiment shown in Fig. 1;

Fig. 3 is a graph showing light source color temperature dependency in the respective results of comparison by first and second comparator circuits shown in Fig. 1; and

Fig. 4 is a schematic block diagram showing a second embodiment of the present invention.

## DESCRIPTION OF THE PREFERRED EMBODIMENTS

The principal of the invention is now briefly described. More specifically, a Moiré component $E_M$ in the above described equation (7) is eliminated only when the average levels of outputs sampled for respective colors coincide with each other. More specifically, when the following equation is satisfied;

$$(G' + R)/2 = G''/2 = (G'' + B)/2 \dots (10),$$

the Moiré component $E_M$ becomes as follows;

$$E_M\ G''/2 \bullet [\cos(\omega_1 - \omega_2)t + \cos\{(\omega_1 - \omega_2)t + 2\pi/3\} + \cos\{(\omega_1 - \omega_2)t + 4\pi/3\}] = 0,$$

whereby the Moiré component $E_M$ is eliminated. Thus, if the amplification gain of each output sampled for each color is controlled to satisfy the equation (10), occurrence of Moiré caused by a component $(\omega_1 - \omega_2)$ can be prevented.

Furthermore, when the equation (10) holds, the second term in the above described equation (6) becomes as follows;

$$\sqrt{3}/2\pi \bullet A = 0.$$

Thus, occurrence of Moiré caused by a component $\omega_1$ can be also prevented.

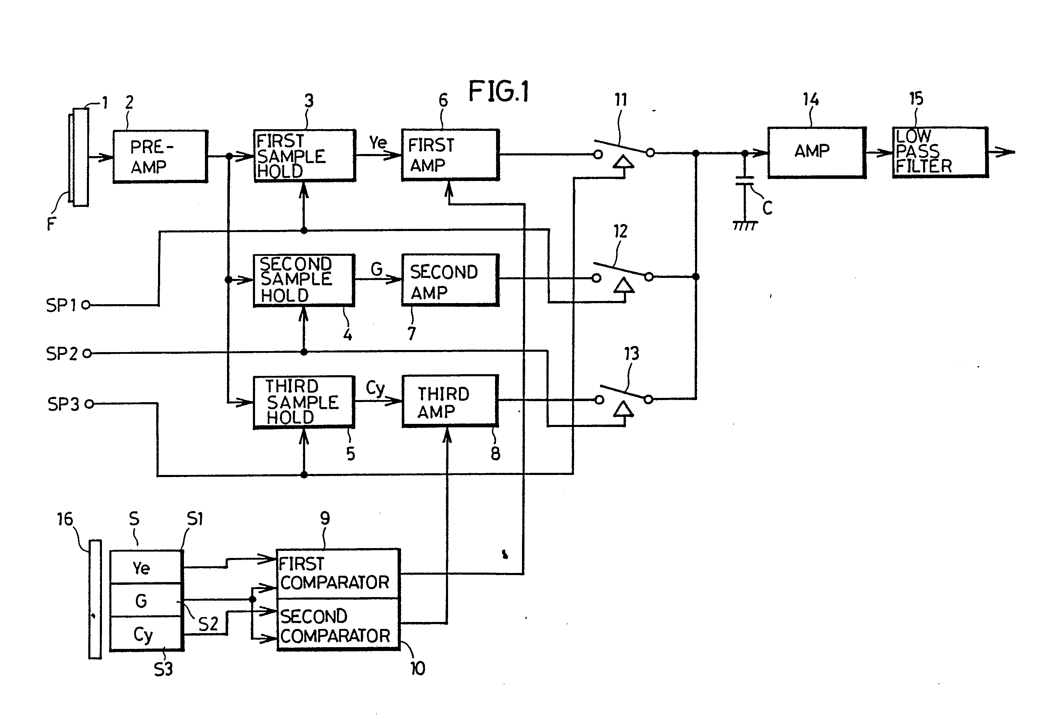

Fig. 1 is a schematic block diagram showing a Moiré preventing circuit according to a first embodiment of the present invention.

Referring now to Fig. 1, description is made on a structure of the first embodiment of the present invention.

In Fig. 1, a color separating filter F is arranged on an image sensing surface of a solid-state image sensor 1. The color separating filter F comprises a Ye (yellow) filter, a G (green) filter and Cy (cyanogen) filter arranged in a striped manner. Sensed image output of the solid-state image sensor 1 is applied to first, second and third sample-hold circuits 3, 4 and 5 through a pre-amplifier 2. The first sample-hold circuit 3 samples only a sensed image output component corresponding to the Ye filter, out of the sensed image output of the solid-state image sensor 1 in response to a first sampling pulse SP1, and the output is applied to a first amplifier 6 with variable gain. Then, the second sample-hold circuit 4 samples only a sensed image output component corresponding to the G filter, out of the sensed image output of the solid-state image sensor 1 in response to a second sampling pulse SP2, and the output is applied to a second amplifier 7. In addition, the third sample-hold circuit 5 samples only a sensed image output component corresponding to the Cy filter, out of the sensed image output of the solid-state image sensor 1 in response to a third sampling pulse SP3, and the output is applied to a third amplifier 8 with variable gain. Furthermore, outputs of the amplifiers 6, 7 and 8 are applied to a common integrating capacitor C through first, second and third switching circuits 11, 12 and 13. The first switching circuit 11 is closed in synchronization with the third sampling pulse SP3 which is generated immediately before the first sampling pulse SP1 is generated, the second switching circuit 12 is closed in synchronization with the first sampling pulse SP1, and the third switching circuit 13 is closed in synchronization with the second sampling pulse SP2. Furthermore, an integrated output of the integrating capacitor C is applied to a low pass filter 15 having a cut-off frequency of $\omega_1/2\pi$ through an amplifier 14. As a result, a luminance signal is derived from the low pass filter 15.

On the other hand, a color temperature detecting sensor S comprises three light receiving elements S1, S2 and S3. Filters Ye, G, Cy having the same three colors as those of the color separating filter F are arranged so that colors Ye, G and Cy correspond to the light receiving elements S1, S2 and S3, respectively, within a milky plate 16. A received light output corresponding to the Ye filter of the light receiving element S1 and a received light output corresponding to the G filter of the light receiving element S2 are applied to a first comparator circuit 9. The first comparator circuit 9 compares the average output levels of received light outputs as inputted and generates a first comparison output. On the other hand, a received light output corresponding to the Cy filter of the light receiving element S3 and the received light output corresponding to the G filter of the light receiving element S2 are applied to a second comparator circuit 10. The second comparator circuit 10 compares the average output levels of received light outputs as inputted and generates a second comparison output. The above described first comparison output is applied to the first amplifier 6 as a control input, so that the amplification gain of an output of the first sample-hold circuit 3 is controlled. In addition, the second comparison output is applied to the third amplifier 8 as a control input, so that the amplification gain of an output of the third sample-hold circuit 5 is controlled.

Description is now made on operation of the Moiré preventing circuit shown in Fig. 1.

In general, even if the same white is imaged, the wavelength thereof depends on the kinds of light sources, so that the output levels differ from each other.

Therefore, the color temperatures of light sources are measured so that a white can be reproduced as a white. A light source having a high color temperature is a pale light source such as a fluorescent lamp (about 5000K), and a light source having a low color temperature is a reddish light source such as an incandescent lamp (about 3000K).

According to the first embodiment shown in Fig. 1, three filters having the same colors as those of a three-color stripe filter arranged on an image sensing surface of a solid-state image sensor are arranged on the corresponding light receiving elements of the color temperature detecting sensor so that the average values of outputs sampled for respective colors of sensed image output are found by the output levels obtained from respective light receiving elements.

Relative output levels of the light receiving elements S1 (Ye), S2 (G) and S3 (Cy) and the first and second comparison outputs corresponding to color temperatures of light sources are represented in the following table 1.

### Table 1

| color temperature (K) | 3000 | 4000 | 5000 | 6000 | 7000 |
|---|---|---|---|---|---|
| Cy | 1.12 | 2.59 | 3.46 | 3.58 | 3.27 |
| G | 0.92 | 1.77 | 2.19 | 2.14 | 1.87 |
| Ye | 2.08 | 3.56 | 4.15 | 3.91 | 3.34 |
| first comparison output (G/Ye) | 0.44 | 0.50 | 0.53. | 0.55 | 0.56 |
| second comparison output (G/Cy) | 0.75 | 0.68 | 0.63 | 0.60 | 0.57 |

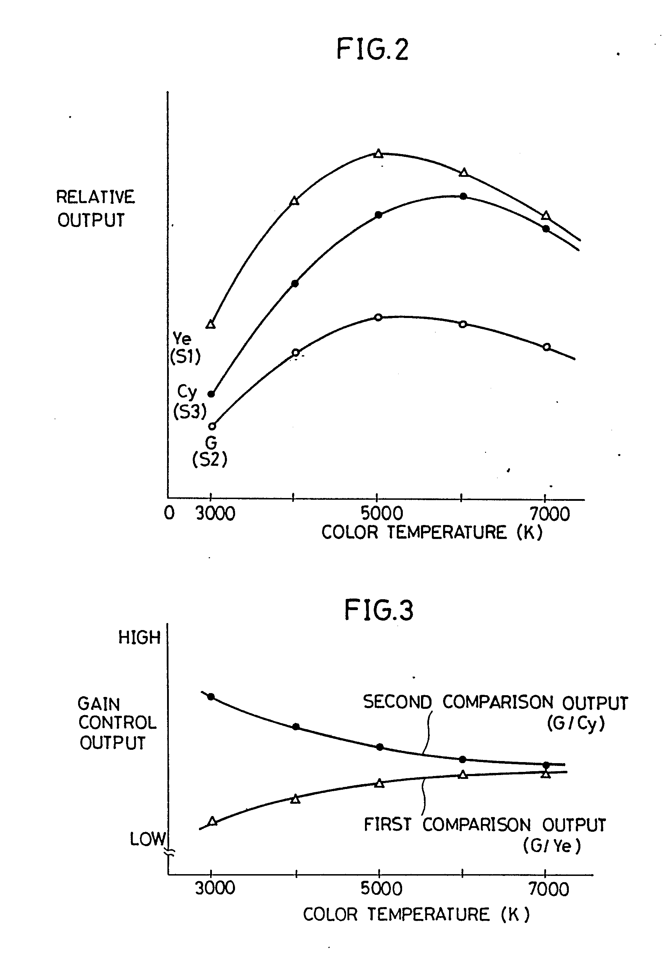

Light source color temperature dependency of an output of each of the light receiving elements represented in Table 1 is shown in a graph in Fig. 2. In Fig. 2, the axis of abscissa represents a color temperature (K) of a light source and the axis of ordinate represents relative outputs levels of the light receiving elements (free scale).

Furthermore, light source color temperature dependency of the first and second comparison outputs represented in Table 1 is shown in a graph in Fig. 3. In Fig. 3, the axis of abscissa represents a color temperature (K) of a light source and the axis of ordinate represents the first and second comparison outputs.

The first comparator circuit 9 applies the first comparison output to the first amplifier 6 and controls the gain so that the average value of the output of the first amplifier 6 coincide with the average value of the output of the second amplifier 7 in response to the difference between the above described color temperature levels inputted from the light receiving elements S1 (Ye) and S2 (G). On the other hand, the second comparator circuit 10 applies the second comparison output to the third amplifier 8 and controls the gain so that the average value of the output of the third amplifier 8 coincides with the average value of the output of the second amplifier 7 in response to the difference between the above described color temperature levels inputted from the light receiving element S3 (Cy) and S2 (G). As a result, the average values of the outputs derived from the first, second and third amplifiers 6, 7 and 8 become equal. More specifically, since the average output levels in terms of the Moiré component $E_M$ shown in the above described equation (7) coincide with each other, the equation (10) holds, so that the Moiré component $E_M$ is eliminated. In addition, $\sqrt{3}/2\pi \bullet A$ which is the second term in the equation (6) is 0, so that Moiré caused by the component $\omega_1$ is prevented.

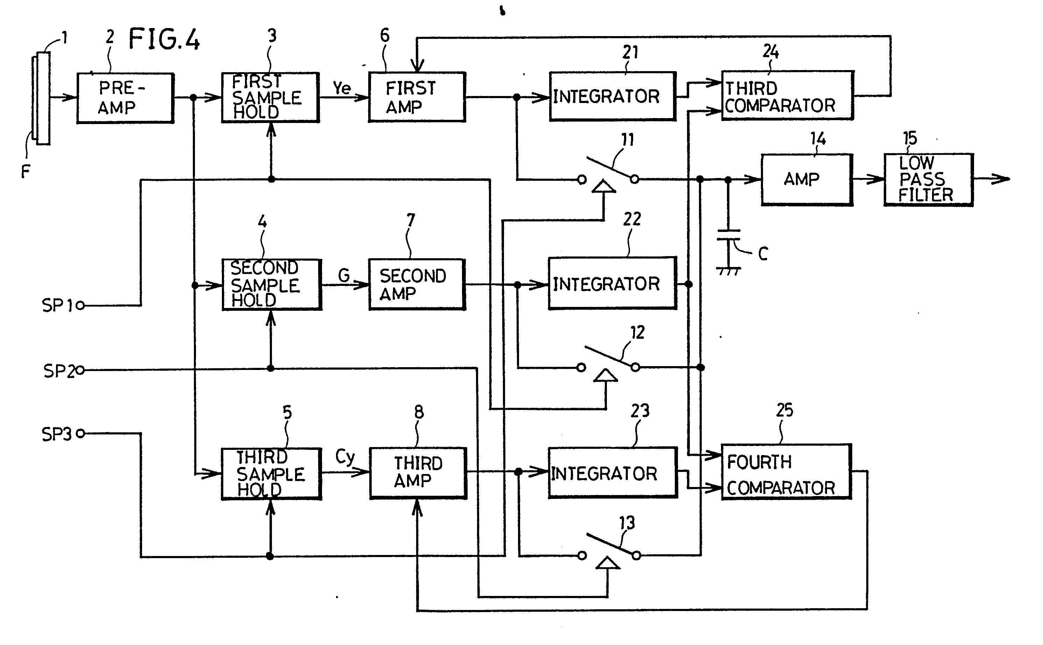

Fig. 4 is a schematic block diagram showing a Moiré preventing circuit according to a second embodiment of the present invention.

The circuit shown in Fig. 4 is the same as the Moiré preventing circuit shown in Fig. 1 except for the following.

More specifically, in Fig. 4, the color temperature detecting sensor S and the first and the second comparator circuits 9 and 10 for comparing the outputs of the color temperature detecting sensor S are not included.

Alternatively, a first integrator 21 for averaging the output of the first amplifier 6, a second integrator 22 for averaging the output of the second amplifier 7 and a third integrator 23 for averaging the output of the third amplifier 8 are newly provided. An averaged output of the first integrator 21 and an averaged output of the second integrator 22 are applied to a third comparator circuit 24. The third comparator circuit 24 compares the averaged outputs of the integrators as inputted thereto and generates a third comparison output. On the other hand, the averaged output of the third integrator 23 and the averaged output of the second integrator 22 are applied to a fourth comparator circuit 25. The fourth comparator circuit 25 compares the averaged outputs of the integrators as inputted thereto and generates a fourth comparison output. The third comparison output is applied to the first amplifier 6 as a control input, whereby the gain of the first amplifier 6 is controlled so that the average value of the output of the first amplifier 6 coincides with the average value of the output of the second amplifier 7. In addition, the fourth comparison output is applied to the third amplifier 8 as a control input, whereby the gain of the third amplifier 8 is controlled so that the average value of the output of the third amplifier 8 coincides with the average value of the output of the second amplifier 7. As a result, the average values of the outputs derived from the first, second and third amplifiers 6, 7 and 8 become equal, so that the Moiré component is eliminated in the same manner as the first embodiment. More specifically, according to the second embodiment, the color temperature detecting sensor is not required and the average levels of the outputs of the amplifiers can exactly coincide with each other.

Meanwhile, although only a luminance signal processing circuits according to the embodiments of the present invention are illustrated in Figs. 1 and 4, a chrominance signal processing circuit (not shown) forms a color-difference signal from an output of each sample-hold circuit and controls white balance in response to an output of a color temperature detecting sensor.

Furthermore, although in the above described embodiments, the first, second and third switching circuits 11, 12 and 13 are provided which are closed in synchronization with the sampling pulses SP3, SP1 and SP2, respectively, these switching circuits 11, 12 and 13 may be omitted so that the outputs of the amplifiers 6, 7 and 8 are directly applied to the integrating capacitor C since the first, second and third sample-hold circuits 3, 4 and 5 basically perform sampling operation in response to the sampling pulses SP1, SP2 and SP3, respectively.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A Moiré preventing circuit for a color video camera, said color video camera including a solid-state image sensor (1) having an image sensing surface receiving light from an object, a color separating filter (F) comprising a plurality of predetermined color filters arranged in a predetermined order, sampling circuits (3, 4, 5) for individually sampling sensed image output obtained from said solid-state image sensor for each of said predetermined colors and outputting the same as color information and luminance signal processing circuits (11, 12, 13, 14, 15) responsive to the color information outputted from said sampling circuits for forming a luminance signal, comprising:

amplifier means (6, 8) with variable gain for amplifying at least a part of the outputs sampled for respective colors of said sampling circuits,

color temperature detecting means (S) for detecting the color temperature level of light from said object, and

gain control means (9,10) responsive to an output of said color temperature detecting means for controlling the gain of said amplifier means so that the average levels of the outputs sampled for respective colors of said sampling circuits coincide with each other.

2. A Moiré preventing circuit in accordance with claim 1, wherein
said color temperature detecting means comprises
color temperature sensors (S1, S2, S3 ) receiving light from said object, and
filter means arranged on light receiving surfaces of said color temperatures sensors for selectively deriving light of a predetermined spectrum from light from said object, and

said gain control means comprises

comparing means (9,10) for comparing the output levels of said color temperatures sensors with each other.

3. A Moiré preventing circuit in accordance with claim 1, wherein

said color temperature detecting means comprises

averaging means (21, 22, 23) for averaging the outputs sampled for respective colors of said sampling circuits, and

said gain control means comprises

comparing means (24, 25) for comparing the output levels averaged for respective colors by said averaging means with each other.

FIG.1

# FIG.2

RELATIVE
OUTPUT

Ye
(S1)

Cy
(S3)

G
(S2)

0    3000                5000              7000
COLOR TEMPERATURE (K)

# FIG.3

HIGH

GAIN
CONTROL
OUTPUT

SECOND COMPARISON OUTPUT
(G / Cy)

FIRST COMPARISON OUTPUT
(G / Ye)

LOW

3000              5000              7000
COLOR TEMPERATURE (K)

FIG.4